# EUROPEAN PATENT SPECIFICATION

(11) **EP 2 633 652 B1**
(45) Date of publication and mention of the grant of the patent: **10.09.2014**
(21) Application number: 11779315.8
(22) Date of filing: 26.10.2011
(51) Int. Cl.: H04L 12/801, H04L 12/851, H04L 12/813

(54) **SCALABLE POLICY-CONTROLLED PACKET INSPECTION SYSTEMS AND METHODS FOR ADVANCED APPLICATION INTERFACE**
SKALIERBARE VORSCHRIFTSGESTEUERTE PAKETÜBERPRÜFUNGSSYSTEME UND VERFAHREN FÜR EINE ERWEITERTE ANWENDUNGSSCHNITTSTELLE
SYSTÈMES ET PROCÉDÉS EXTENSIBLES DE VÉRIFICATION DE PAQUETS CONTRÔLÉS PAR DES RÈGLES POUR UNE INTERFACE D'APPLICATION AVANCÉE

(30) Priority: 27.10.2010 US 407366 P; 11.04.2011 US 201161474017 P
(43) Date of publication of application: 04.09.2013
(73) Proprietor: Interdigital Patent Holdings, Inc., Wilmington, DE 19809-3727 (US)
(72) Inventor: REZNIK, Alexander, Titusville NJ 08560 (US); LYNCH, Kenneth, F., Wayne PA 19087 (US); DI LALLO, Kevin, Montreal QC H1X 2N1 (CA); DI FAZIO, Robert, A., Greenlawn NY 11740 (US); ZUNIGA, Juan, Carlos, QC H4L 3J4 (CA); LIVET, Catherine, Montreal QC H2J 3L6 (CA); PERRAS, Michelle, Montreal QC H2J 3G5 (CA)
(74) Representative: Gunnarsson, Ola Christoffer
(86) International application number: PCT/US2011/057903
(87) International publication number: WO 2012/058320

(56) References cited:
- WO-A1-2010/066295

## Description

### CROSS-REFERENCE TO RELATED APPLICATIONS

This application claims the benefit of U.S. Provisional Patent Application No. 61/407,366, filed on October 27, 2010 and U.S. Provisional Patent Application No. 61/474,017, filed on April 11, 2011.

### BACKGROUND

Quality of Service (QoS) provisioning may be thought of broadly as the ability to provide a different priority to different applications, users, or data flows, or to guarantee a certain level of performance to a data flow. For example, a required bit rate, delay, jitter, packet dropping probability and/or bit error rate may be guaranteed. QoS guarantees may be important if the network capacity is insufficient, especially for real-time streaming multimedia applications such as voice over IP, online games and IP-TV, since these often require fixed bit rate and are delay sensitive, and in networks where the capacity is a limited resource, for example in cellular data communication.

The emergence of multi-connection protocols, such as MPTCP at L4 or multi-rat Dynamic Spectrum Management techniques in the MAC may re-introduce the need for QoS in a new light. Having multiple connection options to choose from can create new degrees of freedom for QoS management. In particular, optimizing one parameter often leads to a different connection management approach then would optimizing a different parameter (for example, latency minimization and peak aggregate rate are often achieved through different utilization of the available connections). Document WO 2010/066295 by Ericsson, published on 17 june 2010 describes the prior art inspection method to determine quality of service.

### SUMMARY

This Summary is provided to introduce a selection of concepts in a simplified form that are further described below in the Detailed Description of Illustrative Embodiments. This Summary is not intended to identify key features or essential features of the claimed subject matter, nor is it intended to be used to limit the scope of the claimed subject matter.

Systems, methods, and instrumentalities are disclosed to determine quality of service information. A device, such as a user equipment (UE), may receive a policy. The policy may indicate a level of inspection relating to application identification for a session. The device may receive information associated with the session. For example, the information may include application provided information, packet data, operating system provided information, etc. The device may perform an inspection of the received information at the level indicated by the policy. The device may perform the inspection in order to identify an application associated with the session.

The policy may indicate that the level of inspection is a first level of inspection, and, the received information may comprise application provided information (e.g., a socket call, a 5-tuple flow marker, etc.). The first level of inspection may indicate that the inspection comprises inspecting the application provided information. The device may perform the inspection in order to identify an application associated with the session. For example, the application provided information may include a socket call, and, the first level of inspection may comprise comparing a port associated with the socket call with an identified port. The identified port may be a known port, such as a port identified by the Internet Assigned Numbers Authority (IANA). The identified port may be associated with an application. The device may identify an application associated with the session as the application associated with the identified port.

The policy may indicate that the level of inspection is a second level of inspection, and, the received information may comprise packet data. The second level of inspection may indicate that the inspection comprises a packet inspection of the packet data. The second level of inspection may indicate a depth of for the packet inspection. Different depths may indicate different computationally intensive inspections. For example, a depth may indicate performing a packet inspection to identify/confirm a top-level protocol, identify/confirm sessions opened by a protocol, identify/confirm application sub-flows, etc. The device may perform the inspection at the level and depth indicated and identify an application associated with the session based on the inspection.

The policy may indicate that the level of inspection is a third level of inspection. The device may query an operating system (e.g., based on the policy). The device may receive operating system provided information. The received information may comprise the operating system provided information. The third level of inspection may indicate that the inspection comprises inspecting the operating system provided information. The device may perform the inspection and identify an application associated with the session based on the inspection.

### BRIEF DESCRIPTION OF THE DRAWINGS

A more detailed understanding may be had from the following description, given by way of example in conjunction with the accompanying drawings wherein:
FIG. 1A is a system diagram of an example communications system in which one or more disclosed embodiments may be implemented;
FIG. 1B is a system diagram of an example wireless transmit/receive unit (WTRU) that may be used within the communications system illustrated in FIG. 1A;
FIG. 1C is a system diagram of an example radio access network and an example core network that may be used within the communications system illustrated in FIG. 1A;
FIG. 1D is a system diagram of an another example radio access network and an another example core network that may be used within the communications system illustrated in FIG. 1A;
FIG. 1E is a system diagram of an another example radio access network and an another example core network that may be used within the communications system illustrated in FIG. 1A;
FIG. 2 illustrates exemplary actors that may impact QoS selection;
FIG. 3 illustrates an exemplary architecture of a QoS sub-system;
FIG. 4 illustrates an exemplary system supporting sessions, sub-flows, and sub-streams;
FIG. 5 illustrates an exemplary ASIF FC;
FIG. 6 illustrates an exemplary session lifetime;
FIG. 7 illustrates an exemplary state transition diagram;
FIG. 8 illustrates an exemplary packet inspection;
FIG. 9 illustrates an exemplary SessionOpen process; and
FIG. 10 illustrates an exemplary SessionConnect process.

### DETAILED DESCRIPTION OF ILLUSTRATIVE EMBODIMENTS

A detailed description of illustrative embodiments may now be described with reference to the Figures. However, while the present invention may be described in connection with exemplary embodiments, it is not limited thereto and it is to be understood that other embodiments may be used or modifications and additions may be made to the described embodiments for performing the same function of the present invention without deviating therefrom. In addition, the figures may illustrate call flows, which are meant to be exemplary. It is to be understood that other embodiments may be used. The order of the flows may be varied where appropriate. Also, flows may be omitted if not needed and additional flows may be added. A method as described in claim 1 and a user delice as described in claim 12 are set forth as follows:

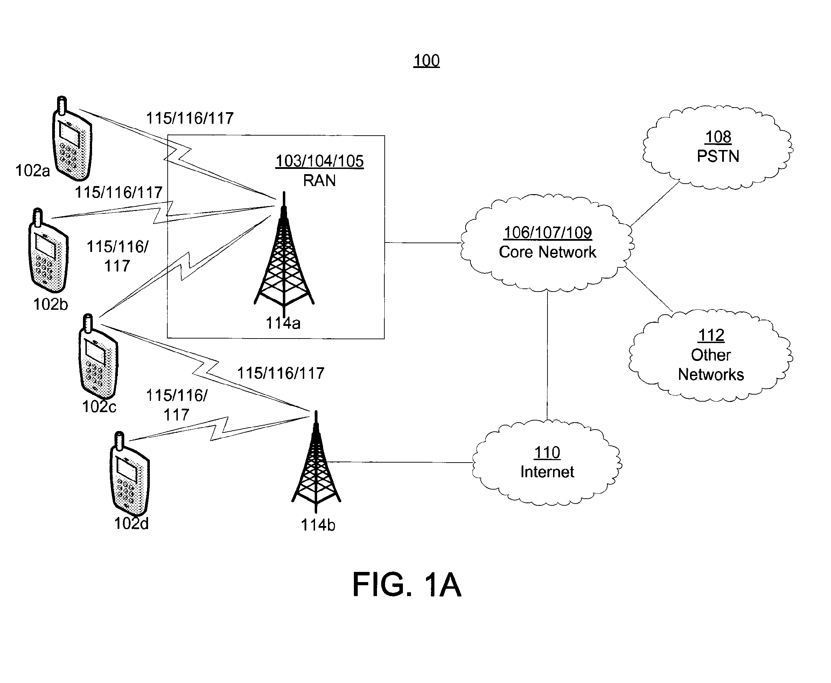

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, and/or 102d (which generally or collectively may be referred to as WTRU 102), a radio access network (RAN) 103/104/105, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106/107/109, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 115/116/117, which may be any suitable wireless communication link (e.g., radio frequency (RF), microwave, infrared (IR), ultraviolet (UV), visible light, etc.). The air interface 115/116/117 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 115/116/117 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106/107/109.

The RAN 103/104/105 may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, etc., and/or perform high-level security functions, such as user authentication. Although not shown in FIG. 1A, it will be appreciated that the RAN 103/104/105 and/or the core network 106/107/109 may be in direct or indirect communication with other RANs that employ the same RAT as the RAN 103/104/105 or a different RAT. For example, in addition to being connected to the RAN 103/104/105, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 103/104/105 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

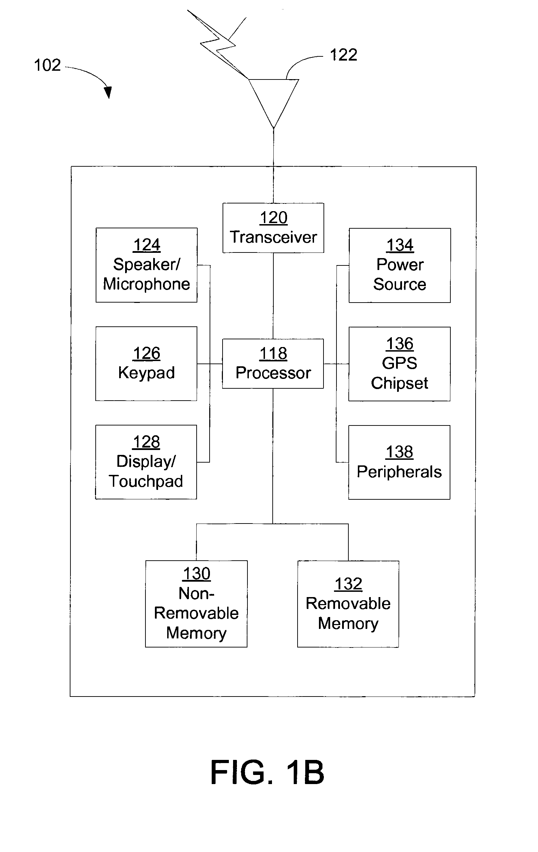

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment. Also, embodiments contemplate that the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, and proxy nodes, among others, may include some or all of the elements depicted in FIG. 1B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

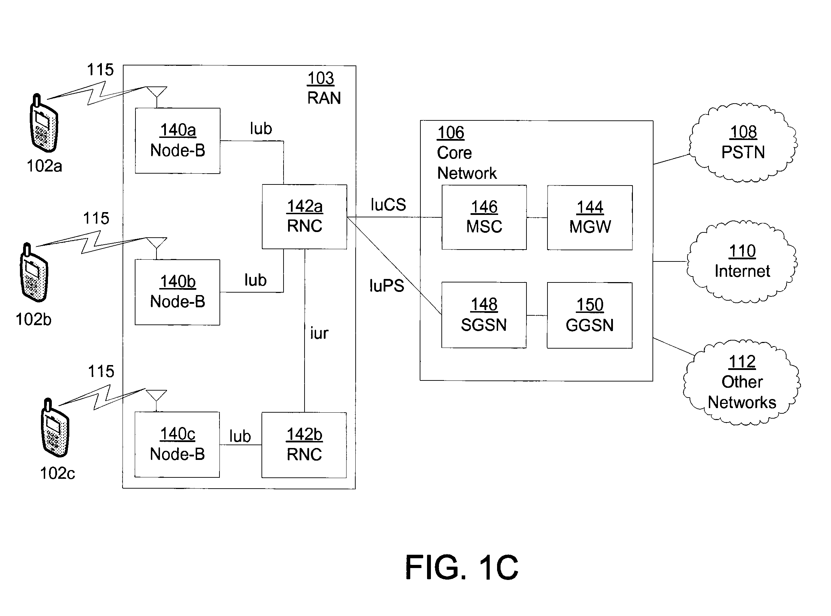

FIG. 1C is a system diagram of the RAN 103 and the core network 106 according to an embodiment. As noted above, the RAN 103 may employ a UTRA radio technology to communicate with the WTRUs 102a, 102b, 102c over the air interface 115. The RAN 103 may also be in communication with the core network 106. As shown in FIG. 1C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC 142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

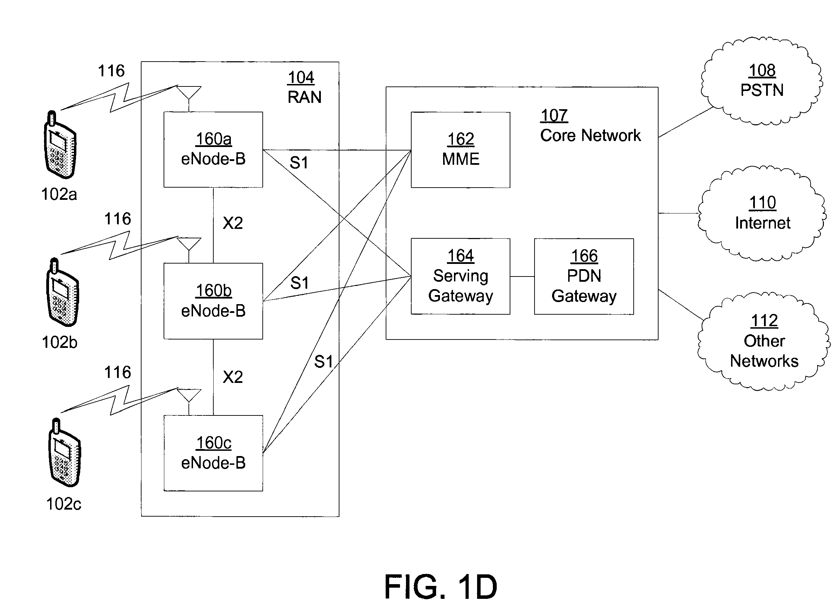

FIG. 1D is a system diagram of the RAN 104 and the core network 107 according to an embodiment. As noted above, the RAN 104 may employ an E-UTRA radio technology to communicate with the WTRUs 102a, 102b, 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, 160c may be associated with a particular cell (not shown) and may be configured to handle radio resource management decisions, handover decisions, scheduling of users in the uplink and/or downlink, and the like. As shown in FIG. 1D, the eNode-Bs 160a, 160b, 160c may communicate with one another over an X2 interface.

The core network 107 shown in FIG. 1D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, 160c in the RAN 104 via the S1 interface. The serving gateway 164 may generally route and forward user data packets to/from the WTRUs 102a, 102b, 102c. The serving gateway 164 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b, 102c with access to circuit-switched networks, such as the PSTN 108, to facilitate communications between the WTRUs 102a, 102b, 102c and traditional land-line communications devices. For example, the core network 107 may include, or may communicate with, an IP gateway (e.g., an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

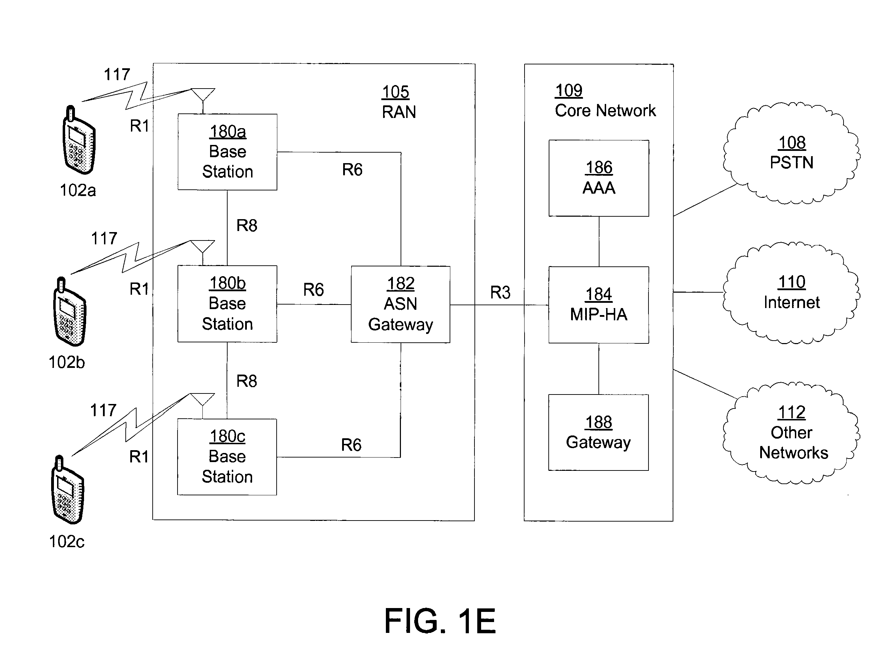

FIG. 1E is a system diagram of the RAN 105 and the core network 109 according to an embodiment. The RAN 105 may be an access service network (ASN) that employs IEEE 802.16 radio technology to communicate with the WTRUs 102a, 102b, 102c over the air interface 117. As will be further discussed below, the communication links between the different functional entities of the WTRUs 102a, 102b, 102c, the RAN 105, and the core network 109 may be defined as reference points.

As shown in FIG. 1E, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell (not shown) in the RAN 105 and may each include one or more transceivers for communicating with the WTRUs 102a, 102b, 102c over the air interface 117. In one embodiment, the base stations 180a, 180b, 180c may implement MIMO technology. Thus, the base station 180a, for example, may use multiple antennas to transmit wireless signals to, and receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. 1E, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. In addition, the gateway 188 may provide the WTRUs 102a, 102b, 102c with access to the networks 112, which may include other wired or wireless networks that are owned and/or operated by other service providers.

Although not shown in FIG. 1E, it will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

Multi-connection may refer to a User Equipment (UE) that keeps more than one network connection simultaneously. Different types of network connections may provide users with different user experiences, such as broad bandwidth, low time delay, and high security. Multi-connection may federate access technologies in order to access the network from different places and times, benefit from different advantages of multiple access technologies, and help provide a better user experience.

A "connection" may be an association established for the transfer of data, e.g., between two or more peer-(N)-entities. The association may bind the peer-(N)-entities together with the (N-1)-entities in the next lower layer.

A "session" may be a logical connection between two or more user terminals, e.g., for the purpose of exchanging information in text format on a real-time basis.

An "IP flow" at a given interface may be defined as the occurrence at that interface of the set of IP packets that match a given classification. An IP flow may comprise packets from a single application session. An IP flow may be an aggregation comprising combined traffic from a number of application sessions. When a classification is subdivided into different sub-classifications (separate or overlapping), different IP subflows may be recognized in the corresponding IP flow.

An "application" may be a structured set of capabilities that provides value added functionality, which may be supported by one or more services that may be supported by an API interface.

A "multi-connection" may be a collection of several connections, e.g., between two or more peer-(N)-entities receiving and/or transmitting simultaneously. The connections may be coordinated to provide service to higher layer entities. In multi-connection communications, at least one UE may be required to be a multi-connection UE.

A "service decomposition" may be a decomposition of one service into several service components. The original service logic may be restructured transparently to the end user and application.

A "media flow" may be a stream of media being transmitted from a sender to interested receivers.

Multi-connection capability may be required by subscribers in many cases, for example to balance network load, provide the subscribers with wider bandwidth, charge services more fairly by utilizing different available simultaneous accesses to them, support the user when visiting more than one network simultaneously, etc. Using video conferencing as an example, the voice may be transmitted by a 2G/3G network to assure real time service via a circuit switched network, while the video component may be transmitted via Wi-Fi with larger bandwidth.

In a multi-connection network, the UE and the network may be aware of the interactions created by the number of simultaneous accesses provided to the application and an associated QoS for each. The combination or resulting QoS may portrait the combination of each QoS associated with a specific service.

Specifying QoS may be implemented using a preferential approach. While an application may not know a data rate or a latency that it needs, it may be likely to know which one is more important to it (e.g., which one has a higher priorty). There may be little incentive for an application to be honest about the quantity of service it needs (e.g., ask for less than the maximum rate or more than the minimum latency), there may be incentive for the application to indicate which one it considers to have a higher priority. A dishonest application (e.g., one that states that it cares about latency more than it does about data rate when the opposite is true) may risk getting poor service from a protocol (e.g., when multi-connection protocols are used).

In an example, consider a QoS space with two parameters, data rate and latency, although additional parameters may be utilized. A multi-connection end-to-end protocol may have available to it two connections, and, as part of its Application Interface, it may request the application to indicate which parameter has a higher priority to the application (e.g., indicate a preferred resource) - data rate or latency.

An exemplary multi-connection protocol may operate as follows. For each data packet from the application, the protocol may decide which connection to send the data packet over. For example, it may send a data packet over connection 1, connection 2, or both. If the packet is sent over both connections, an acknowledgement (ACK) over any one of the two connections may be sufficient to consider the packet delivered. Upon receiving data from the application, the multi-connection protocol may decide where to send it. If the application indicated that it cares more about data rate than latency, then the protocol may send some data over connection 1, while sending different data over connection 2. The resulting throughput rates achieved may be the sum of the rates available over both connections. If the application cares more about latency than data rate, the policy may send duplicate data over both connections. The latency on each packet may be the minimum of the latencies for that packet on each connection (e.g., latency is minimized). Such an approach may incur a penalty in that the throughput may be the minimum of the throughputs over the two connections.

As in the above example, data rate and latency may be potentially conflicting QoS criteria. By forcing the application to state which parameter it cares about more, a multi-connection protocol may force the application to be honest because dishonest behavior may be detrimental to the application. The information provided over the QoS interface may be actionable by the multi-connection protocol (e.g., it may provide it with information on how to prioritize transmission parameters).

QoS may include many parameters. For example, QoS may include one or more of the following: Data Rate/Throughput; Latency; Jitter; Delivery Guarantees; Cost; Power Consumption; or Security (which may, for example, be further broken down into Privacy, Integrity, Delivery Assurance, etc.).

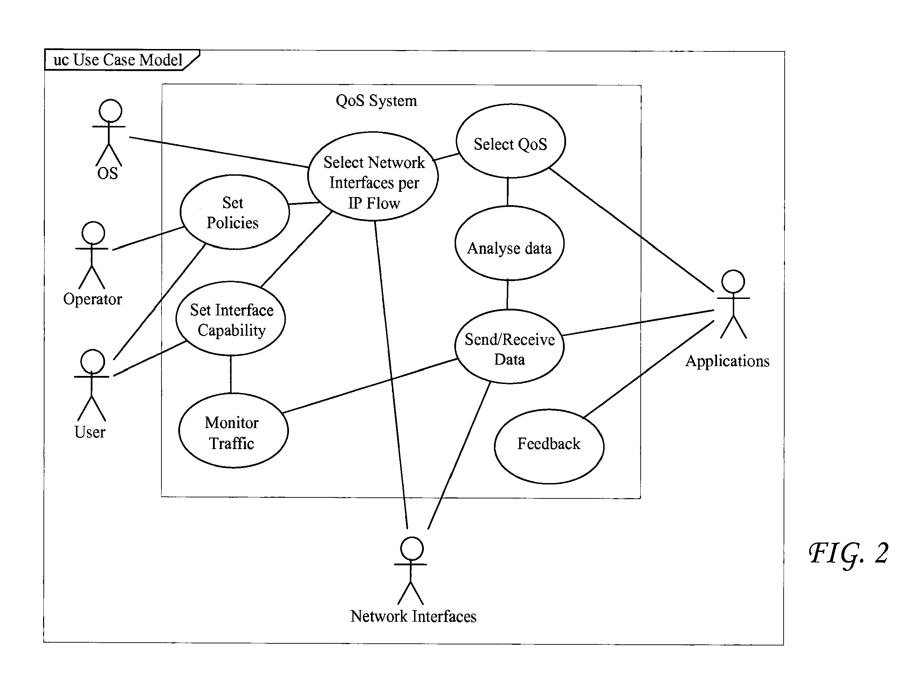

Other actors besides the application may have a stake in a communication ecosystem. For example, an operating system (OS) may have more influence about power consumption constraints than the application, link cost importance may be driven by the operator and/or user needs, etc. FIG. 2 is a diagram that illustrates exemplary actors which may impact the QoS selection procedure across a wide number of use-cases. FIG. 2 includes a high-level view of the various components that a QoS sub-system may include.

A preferential interface may include one or more interfaces to an application. As an example, consider a single interface to the application. The interface may comprise a set of available parameters exposed to the application. The application may be informed of what the set is. The set may include one or more parameters, such as one or more of the parameters disclosed herein. As an example, {Cost, Latency, Throughput, Power Consumption} may be a set of QoS parameters. The application may be asked to rank the parameters in order of importance. For example, an application that needs maximal possible throughput, cares less about latency, even less about cost, and least about power consumption may provide the following ordered set to the connection protocol: {Throughput, Latency, Cost, Power Consumption}.

An application may not know what to do with some of the parameters. For example, an application running on a laptop may not be aware of power supply constraints or the nature of wireless connectivity. In this example, the application may not know what to do about power consumption or cost.

Components of the interface may be defined. Examples may include an ordered preference list (OPL) and a "no information list" (NIL) (e.g., for parameters that the application cannot rank). Continuing the example, the application may provide OPL = {Throughput, Latency} and NIL = {Cost, Power Consumption}. The NIL list may be implicit instead of explicit, e.g., if the design assumes that parameters not in OPL are in NIL.

Preference may be dependent on the quantitative performance that may be provided by the multi-connection protocol. For example, an application may care about throughput more than latency, provided a minimum latency requirement is met. To support this and similar types of operations, the interface may be enhanced with feedback. The protocol may provide the application feedback on the quantitative performance against the parameters in the OPL. The application may change the OPL and NIL settings at any time, adjusting how its data is handled.

An application may need to identify what data which QoS is to be applied to. As an example, web browsers may generate one or more of the following the following types of traffic: HTTP session negotiation; "Normal" web page data; embedded audio and video streams (which themselves may have various layers); secure components, etc. An application (e.g., an evolved web browser) may partition such data (or label it in a way that can be understood by the connection protocol) and set the QoS interface for each one of its sub-flows. This may require evolution of existing interface constructs. For example, the interface to existing L4 protocols (TCP, UDP) may use the notion of a "port." An application may open a port with the L4 protocol, and the L4 protocol may use the notion of a port to separate data from different applications. An application may open multiple ports. A connection oriented protocol, e.g., TCP, may be used to keep the data on a single port in sync - a feature that may be desirable for the many sub-flows. By using different ports, this capability may be lost.

The notion of a port may help to uniquely identify the application. For example, currently the 3-tuple of <L4 protocol (generally TCP/UDP), port number, destination IP> [also source IP] may be used to identify an application uniquely. Different applications may use the same port to communicate with different destinations. The same port number may be used for different protocols (e.g., UDP or TCP) for the same destination. Usage of the same <L4 protocol, port number, destination IP> may not be explicitly prohibited, however, it may be avoided because it may make it difficult for the operating system (which may implement the TCP/IP protocol stack) to identify data with applications.

Changes may be made to the above. The source IP may become an essential part of the flow (or sub-flow) identifier as different sub-flows may be mapped to different interfaces by binding them to different source IP addresses. The notion of flow IDs may be required. The concept of a port may include the notion of sub-ports. Each sub-port may be associated with an application sub-flow and a different QoS setting may be defined for each sub-flow.

As another example, consider an L2 connection protocol with the IP protocol serving the role of "application." In this case, it may be assumed that the IP protocol stack is able to associate different QoS needs with different datagrams (e.g., this information may be propagated through the stack in a proprietary way). Some MAC layers, such as 802.11 through the 802.11e extensions for example, may provide for placing data in different queues with a different QoS associated with each queue. The information provided over the QoS interface may then be used by the MAC protocol to determine which queue each datagram should be placed in.

An interface to multiple actors may be provided (e.g., application, operating system (OS), user, operator, etc.). A connection/port may be opened by an application, e.g., via an (advanced) socket call. This may enable the application to specify the QoS, e.g., either via OPL/NIL or by another implementation. The port opening process may not provide a direct means for other actors to provide their input. This may be accomplished, for example, depending on whether these actors wish to provide input on a per-port basis, or global input applicable to all ports opened since the time the input is provided and as long as it is valid.

In the case of global QoS provisioning by non-application actors, an actor (e.g., OS, user, operator) may provide the QoS management entity the information on parameters of interest to it. The information may be provided in a similar form as provided by the application (e.g., OPL/NIL). The content may be different. The information may not be associated with any specific port and may not be provided when a socket is opened. The information may be provided at any time.

The ways by which this information is provided may differ by actor. Examples may include one or more of the following. Operating system (OS) information may be provided via an API from the QoS Agent and the OS. The API may be different from the application API as it may not involve a socket call. User information may be provided via a user interface. Operator information may be provided to the device through an operator policy, which a device management entity (e.g., an OMA DM entity) may then pass to the QoS Agent via an API the Agent provides to the device management entity.

Per-application provisioning may be tied to opening a port (e.g., a socket call). The non-application actors may not be directly aware that a socket is being opened. If per-application provisioning by such an actor is enabled, the QoS Agent may need to trigger the actor to provide the information. The triggering may be accomplished by a polling call - e.g., the API to each actor may include a capability for the QoS agent to poll the actor for such information. For example, the QoS Agent may poll the OS as to its power preference for a particular application when that application requests to open a port.

In the case of a user and operator input the polling process may involve additional actions. For a user, the polling process may need to initiate a user interface action that requests a user to input particular data (e.g., a process similar to asking the user whether an application should or should not be allowed internet access).

In the case of the operator, the device management entity may be polled for such information. If the information is not available in the locally stored policy, the device management entity may need to communicate with the operator to obtain it.

An approach to preferential QoS specification may use descriptive properties for each QoS category. This may be implemented in a way that each value for each property is orthogonal (e.g., the application or non-application actor may need to remain honest). For example, one QoS property may be Throughput and it may be specified using 3 values, e.g., as illustrated in Table 1.

**Table 1**

| **TYPE OF SERVICE** | **DESCRIPTION** |
|---|---|
| **Fixed Rate High Priority Streaming** | Throughput may be guaranteed up to a specified limit and data may be sent with high priority. |
| **Variable Rate Streaming** | Throughput may be unlimited and may consume the whole pipe if it is available. As this data may take a lower priority to fixed-rate data the rate may vary based on network conditions. |
| | As an example, Throughput is uncapped and during off-peak hours will well exceed the guaranteed BW limit. During periods of congestion, only a best-effort service is offered (i.e. traffic may be dropped and BW may be lower). |
| **Burst traffic** | Unlimited better-than-best-effort throughput may be provided for short periods of time. Traffic may be higher priority than unlimited best-effort forwarding but may only run for short periods of time. BW guarantees may not be provided. |

The property of Power may be specified as illustrated in Table 2.

**Table 2**

| **TYPE OF SERVICE** | **DESCRIPTION** |
|---|---|
| **No Constraint** | Power may not be a constraint, other QoS conditions should be satisfied without consideration of power |
| **Minimize subject to <value> met** | Minimize power subject to meeting QoS requirements specified in the <value> field (e.g. subject to *Throughput* requirements. |
| **Conserve Power Mode** | Operate according to a pre-defined power conservation mode or policy. |

The property of Latency may be specified as illustrated in Table 3.

**Table 3**

| **TYPE OF SERVICE** | **DESCRIPTION** |
|---|---|
| **Urgent** | Traffic may be delivered with minimal latency possible. In this case, no consideration to throughput may be given in trying to satisfy the latency constraint. |
| **Latency sensitive** | This traffic may support applications that are sensitive to latency. While throughput conditions should be met high-latency connections should be avoided. |
| **Latency insensitive** | Meet other conditions (e.g. maximize overall throughput), impact on latency may be ignored. |

### Other properties may be specified in a similar fashion.

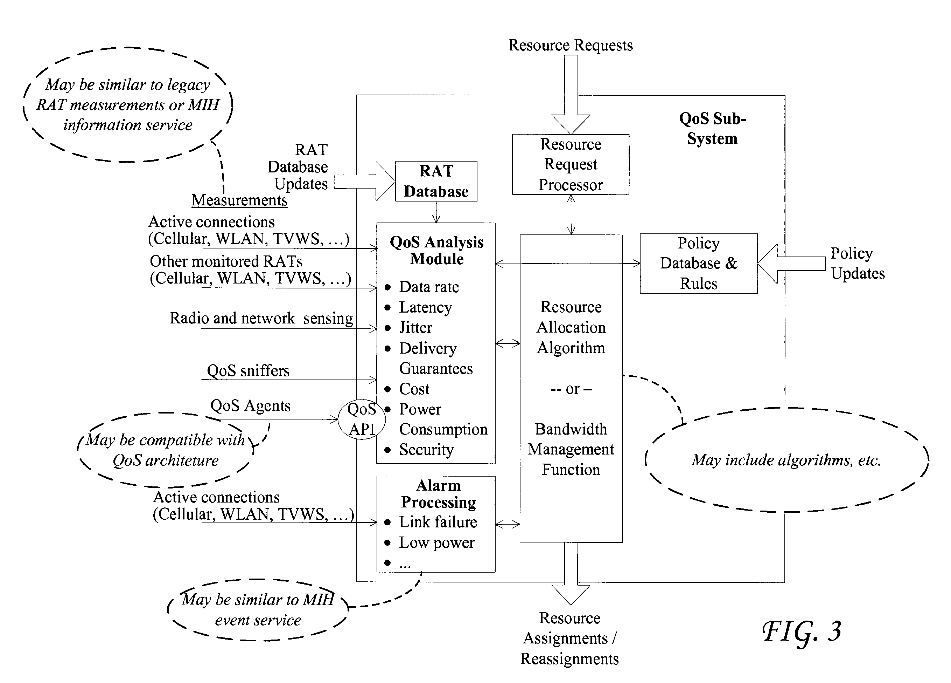

FIG. 3 illustrates an exemplary architecture of a QoS sub-system. FIG. 3 includes an architecture between the application and a connection protocol. FIG. 3 includes a QoS API and agent in the overall system. As shown in FIG. 3, the QoS sub-system may include one or more of the following. The QoS sub-system may include a Radio Access Technology (RAT) database that may store a list of RATs, which may be known to the device, and their characteristics. The QoS sub-system may include a QoS Analysis Module, which may perform the analysis of QoS needs and how they can be satisfied. In addition to the input provided by the QoS API and the QoS Sniffer, the QoS Analysis Module may take other inputs, including information about active connections, connections that may be activated, sensing information from both the radio environment and network, as well as other potential inputs, etc. Decisions on QoS parameters for each connection may be made by the QoS Analysis Module. The QoS sub-system may include a Policy Database, which may comprise a set of rules that control decision making of the QoS Analysis Module and the Resource Allocation/Bandwidth Processor model. The policy may be built in to the device, provided by the primary network operation, user, the OS, etc. The QoS sub-system may include an Alarm Processor that may react to error events. The QoS sub-system may include a Resource allocation/Bandwidth management algorithm that may distribute packets received from a particular application to connections as directed by the QoS Analysis Module under normal conditions and Alarm Processor during error conditions.

The QoS Sniffer Function (QSF) may exercise the QoS interface on behalf of applications, e.g., applications that may not be able to do this on their own. To do so, the QSF may need to determine what type of application the data stream is coming from and what QoS the application may need or be likely to need. This may include the following. The QSF may try to guess the application type based on the data the application is sending. This may be accomplished by the use of Deep Packet Inspection (DPI), e.g., a DPI algorithm. A DPI algorithm may examine the data for information such as transport protocol (TCP or UDP) ports being used, application protocol headers, and other information. This may allow it to determine the nature of the application protocol that is being used (e.g., FTP, HTTP, RTSP, etc.). Application types may be inferred from ports being used (e.g., web browsing sessions may typically be initiated using TCP Port 80 and the HTTP protocol). DPI algorithms may analyze the sub-flows of each application flow to further identify different types of sub-flows which may require a different QoS. For example, modem HTTP flows may include web page data, video streams and secure components, among others. Each of these may require different QoS treatment. A DPI implementation may be able to identify data packets carrying information for each of these sub-flows within a HTTP web browsing session.

DPI may be used to identify each application/data sub-flow. QSF may use this information to set the QoS interface based on the sub-flow type. For example, data sub-flows may be assumed to care most about peak throughputs, while interactive (e.g., VoIP) sub-flows may be assumed to care more about latency, and https sub-flows may be assumed to care most about security. The sub-flows may be partitioned by the QSF, and, the QoS interface may be set for each of them. QoS setting on behalf of legacy applications by the QSF may be performed as described herein.

In the context of the QoS interface, the QSF may be used to set priority for QoS properties that the application has set into the NIL set. For example, the QSF may be aware of power requirements of the device which each particular application is not aware. While the applications place "Power" into the NIL set, the QSF may modify this setting by placing "Power" into the OPL with the proper priority.

A source of information for the QSF may be the device operating system. For example, the OS may be aware of power or security requirements of which the applications are not aware. A source of information for the QSF may be the user and operator input (e.g., as disclosed herein). Cost, power, and security settings are examples that may be input by the user, e.g., through the connection manager application.

A function that the QSF may serve is that of a negotiator that discovers an application's needs. This feature may be used to add a quantitative QoS element to the preferential interface described herein. For example, suppose that an application requests a particular value for a data rate (e.g., through a quantitative add-on interface). The QSF function may start out by allowing that same value to be reported over the QoS interface, but then slowly reduce it (e.g., choke the data rate) until a negative effect is observed. For example, the application may signal over an API, or other measurements, e.g., as shown in FIG. 3, or an application may indicate a stress condition, e.g., a condition that is discovered via bandwidth utilization monitoring as described herein, etc. In some instances, the application's true data rate needs may be discovered using such processes(es). More generally, in the cases where a quantitative interface component is available as part of the QoS interface, the QSF may intercept application (or OS) settings for the interface for the following potential purpose of interactive (e.g., through gradual choking or opening up) discovery of the true needs for the particular QoS aspect (e.g., data rate, latency, etc.). Such an approach may, for example, be compatible with multi-rate audio or video codecs where perceived quality may be sacrificed based on available capacity in exchange for maintaining a connection.

A choking approach may be slow in learning an application's true needs, may not be able to cope with very dynamic changes, and/or may cause problems for some applications that may not be able to tolerate a varying data rate. It may be possible to mitigate this by throttling the data rate in a controlled (e.g., slow) manner, compatible with the application, however this may reduce effectiveness. Bandwidth steering may be used.

Bandwidth steering may be used as follows. Bandwidth utilization may be monitored to determine that available bandwidth is being utilized. This may be done, for example, through physical layer measurements, observations of MAC queues (e.g., queue sizes and packet dwell times in the queue), observations of network delays (e.g., in the TCP congestion control algorithm), etc. If a device detects that bandwidth has become scarce (or is instructed by the network operator to reduce its total data output), it may operate as follows. For each existing stream, "stream momentum" may be preserved. This means that an application currently running may be allowed to keep the bandwidth it is actually using up to some maximum value. For example, if a video application is using 4 Mbps, it may be allowed to continue such use as long as it continues to provide 4 Mbps of traffic (e.g., assuming 4 Mbps is below the maximum value). Remaining bandwidth may be allocated to new applications according to priorities established by the QoS Analysis module.

If an application stops using the bandwidth, it may lose its "stream momentum" and the bandwidth it was using may go back into the available pool. The application may become a contender for it along with all other applications. Non-zero minimum rates may be guaranteed to applications to support connectivity. The process may be interrupted for an application marked as urgent (e.g., health, safety, etc). This may require keeping some bandwidth in reserve or allowing a small proportion of allocated bandwidth to be reclaimed (e.g., reduce the 4 Mbps to 3.75 Mbps).

Bandwidth steering based on QoS requirements may allow an application that is using bandwidth to retain its use (e.g., may be implemented akin to a first-come, first served policy). A policy may need to account for a situation where there is not enough bandwidth available (e.g., have a rule set for such situation). For example, such a policy may include one or more of the following. New applications may be denied service. Available bandwidth may be equitably split. As an illustration (e.g., using the above example), two streams may be given 2 Mbps each. This may risk that the reduced rate is not sufficient to maintain one or both streams and may be recognized in a similar way to the choking approach. An objective may be to recognize and react to an error situation to avoid a service interruption. For example, the new stream may be slowly throttled up while the existing stream is throttled down. Other policy examples, combining features described herein may also be implemented.

Systems, methods, and instrumentalities are disclosed to determine quality of service information. A device, such as a user equipment (UE), may receive a policy. The policy may indicate a level of inspection relating to application identification for a session. The device may receive information associated with the session. For example, the information may include application provided information, packet data, operating system provided information, etc. The device may perform an inspection of the received information at the level indicated by the policy. The device may perform the inspection in order to identify an application associated with the session.

Each level of inspection may be associated with a different level of computational intensity. For example, a level of inspection for an inspection of application provided information (e.g., a socket call, a 5-tuple flow marker, etc.) may be less computationally intensive than a level of inspection for packet inspection. A lower level of inspection may indicate a less computationally intensity inspection, while a higher level of inspection may indicate a more computationally intensive inspection. The level of inspection for a session flow, sub-flow, etc., may be set at a lower level by the policy to reduce device resource use. For example, the policy may indicate that when an application has been identified for a session, a lower level of inspection may apply to information for that session. Also as an example, a policy may indicate that an application may be associated with a certain port (e.g., an application using port 21 may be tagged as FTP). In such a case, the policy may indicate that further inspection is not necessary. This may relate to a top-level inspection as described below.

The policy may indicate that the level of inspection is a first level of inspection, and, the received information may comprise application provided information (e.g., a socket call, a 5-tuple flow marker, etc.). The first level of inspection may indicate that the inspection comprises inspecting the application provided information. The device may perform the inspection in order to identify an application associated with the session. For example, the application provided information may include a socket call, and, the first level of inspection may comprise comparing a port associated with the socket call with an identified port. The identified port may be a known port, such as a port identified by the Internet Assigned Numbers Authority (IANA). The identified port may be associated with an application. The device may identify an application associated with the session as the application associated with the identified port.

The policy may indicate that the level of inspection is a second level of inspection, and, the received information may comprise packet data. The second level of inspection may indicate that the inspection comprises a packet inspection of the packet data. The second level of inspection may indicate a depth of for the packet inspection. Different depths may indicate different computationally intensive inspections. For example, a depth may indicate performing a packet inspection to identify/confirm a top-level protocol, identify/confirm sessions opened by a protocol, identify/confirm application sub-flows, etc. The device may perform the inspection at the level and depth indicated and identify an application associated with the session based on the inspection.

The policy may indicate that the level of inspection is a third level of inspection. The device may query an operating system (e.g., based on the policy). The device may receive operating system provided information. The received information may comprise the operating system provided information. The third level of inspection may indicate that the inspection comprises inspecting the operating system provided information. The device may perform the inspection and identify an application associated with the session based on the inspection.

The policy may include a default inspection level. For example, the default inspection level may be applied to an unknown flow (e.g., until the flow is in an unverified state, verified state, etc.).

A socket (e.g., an Internet socket or network socket) may refer to an endpoint of a bidirectional inter-process communication flow across an IP-based network, such as the Internet. The term Internet sockets may be used as a name for an application programming interface (API) for the TCP/IP protocol stack, which may be provided by the operating system. Internet sockets may provide a mechanism for delivering incoming data packets to the appropriate application process or thread, based on a combination of local and remote IP addresses and port numbers. A socket may be mapped by the operating system to a communicating application process or thread.

A socket address may comprise a combination of an IP address and a port, which may be mapped to the application program process into a single identity, which may be similar to how one end of a telephone connection is the combination of a phone number and a particular extension. Some sockets (e.g., windows-based, Linux-based, UNIX-based) may be implemented by an API library, such as Berkeley or BSD sockets.

The socket API provided by kernels may be based on Berkeley socket API. Functions such as those in Table 4 may be supported. Note that the socket function calls may be the socket function calls used for Linux-based API.

**Table 4**

| | |
|---|---|
| socket() | May create a new socket of a certain socket type, identified by an integer number, and allocates system resources to it. |
| bind() | May be used on the server side, and associate a socket with a local socket address structure, e.g., a specified local port number and IP address. |
| listen() | To accept connections, a socket may be first created with socket(), a willingness to accept incoming connections and a queue limit for incoming connections may be specified with listen(), and then the connections may be accepted with accept(). |
| | The listen() call applies to sockets of type SOCK_STREAM or SOCK_SEQPACKET. |
| connect() | May connect a socket to a remote socket address |
| accept() | May be used on the server side. It may accept a received incoming attempt to create a new TCP connection from the remote client, and creates a new socket associated with the socket address pair of this connection. |
| send() and recv(), or sendto() and recvfrom() | May be used for sending and receiving data to/from a remote socket. |
| write() and read() | May be used for writing and reading data to/from a remote socket. |
| close() or shutdown() | May be used to close a socket. Shutdown may provide also the way (how) to shut it down. |
| gethostbyname() and gethostbyaddr() | May be used to resolve host names and addresses (IPv4). |
| getaddrinfo() and getnameinfo() | These functions may make the above gethostbyname() and gethostbyaddr() obsolescent as they may provide similar information being protocol-agnostic (i.e. supporting IPv6) |
| Setsockopt()/getsockopt() | getsockopt() and setsockopt() may manipulate the options associated with a socket. Options may exist at multiple protocol levels; they may need to be present at least at the uppermost socket level. |

An application may refer to an application running at L5 or above, e.g., in ISO module. It may be the application as seen by the user on his terminal. As examples, an application may be a web browser, an FTP application, a VoIP client, a Skype application, etc. An application may be uniquely identified by an Application ID (AID). The OS process ID associated with the application may be used as the Application ID.

A session may refer to an L4 transport socket as opened by an application through socket API. Example sockets may include a UDP, a TCP, an MCTP, an MNTP socket, etc. A session may be uniquely identified by a unique session ID. An application may open one or multiple sessions. For example, an FTP Application may open two sessions - an FTP control session and a separate FTP data session. These sessions may be referred to as dependent sessions.

A sub-flow may refer to a multi-connection (L4) transport layer concept. An MCTP or MNTP single session may open multiple sub-flows. These sub-flows may not be known as such by the application and may be handled by the transport layer.

A sub-stream may be an application concept. This may be a way to differentiate bits generated by the same application. For example, a voice codec may generate class A, B, and C sub-streams.

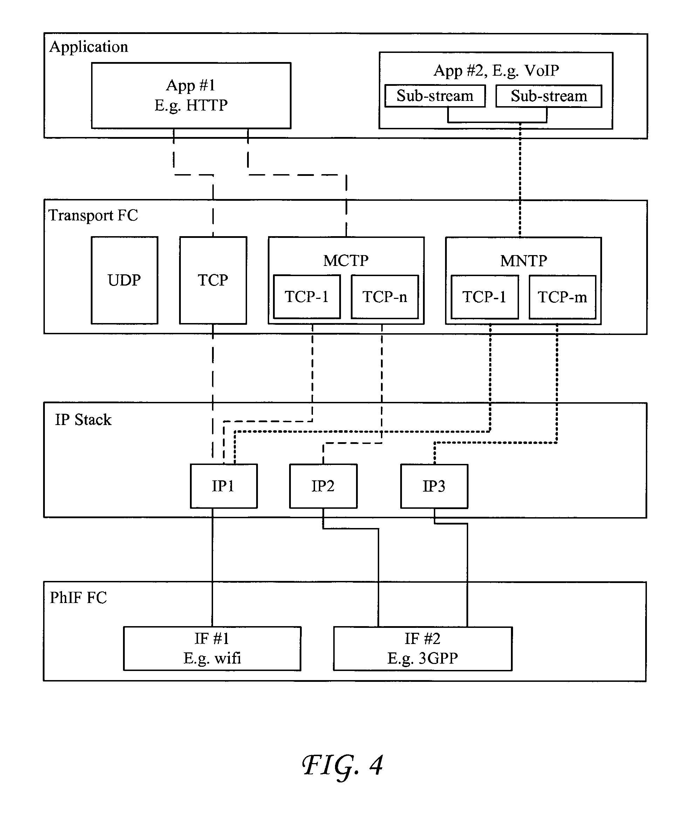

FIG. 4 illustrates an exemplary system supporting sessions, sub-flows, and sub-streams. In the example of FIG. 4, Application 1 has two dependent sessions, a TCP and an MCTP. The MCTP session supports two sub-flows. Application 2 has one session and two sub-flows, and as it is a VoIP application, the application data stream sent on the session comprises two sub-streams (e.g., for class A and class B bits), that may eventually be split over the 2 sub-flows.

As communication capabilities of terminals (e.g., UEs) increase, the services provided by the standard socket interface may not be sufficient. A standard socket interface may not be able to indicate its service preference (e.g., to pass Quality of Service (QoS) information to the protocol stack).

The socket interface may be extended to provide QoS requesting capabilities to applications. For example, the socket interface may be extended to include advanced features. This approach may apply to applications that have actually been designed to take advantage of such "advanced" socket interface. For existing (e.g., legacy) applications, there may be a need to infer what an application needs from the socket calls it makes and the data it sends and receives. This may be accomplished by the use of a Deep Packet Inspection (DPI) algorithm. Such a protocol is typically computationally intensive (e.g., it may impact power consumption and/or the throughput of the stack).

Systems, methods, and instrumentalities are disclosed that may provide a desired level of identification without the use of DPI and/or may allow for selective, policy-controlled use of DPI. The extent to which DPI may be used may be configurable by a control entity in the terminal, e.g., a session manager. This may allow policy-based control of resources dedicated to DPI and a level of identification provided by the evolved socket interface described herein.

An Advanced Socket Interface (ASIF), e.g., for support of legacy applications, is disclosed herein. The ASIF may be a functional component for an enhanced protocol stack implementation that provides access capability for applications to initiate and utilize communication sessions. For the purposes of backwards compatibility, it may present itself to applications as an enhanced socket interface. The ASIF may provide one or more of the following: techniques for applications to open/close and manage IP stack (e.g., EIPS) connections for their purposes; provide the session management (SM) component information about an application that may require connectivity as well as its QoS requirements; or pass application data to/from the proper transport protocol, e.g., as defined by the connection manager.

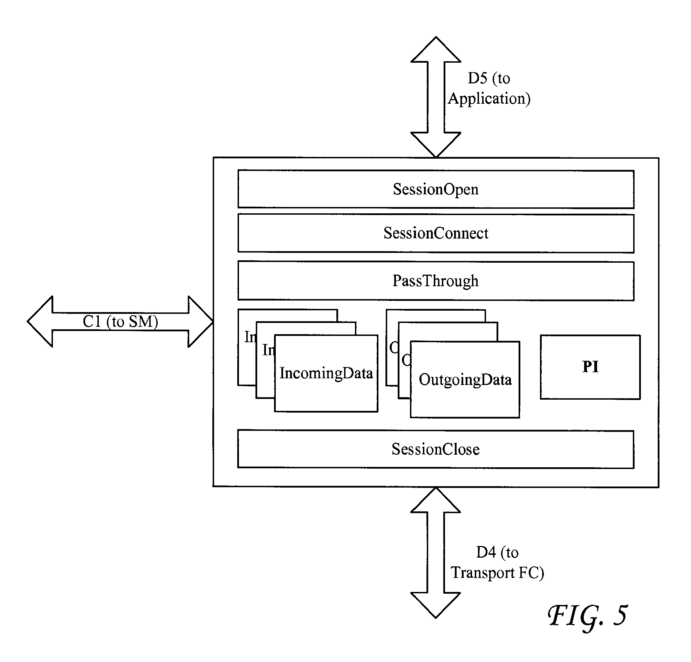

FIG. 5 is a functional diagram of an example ASIF functional component (ASIF FC). As shown in FIG. 5, ASIF may interface with a control entity (e.g., a a session manager (SM)), transport layer, and applications, for example, through exemplary interfaces C1, D4 and D5. Interface D5 used to communicate with applications may be based on the BSD sockets interface. The ASIF may support (e.g., as internal implementations) one or more of the following functions: SessionOpen, SessionConnect, SessionClose, IncomingData, Outgoing Data, or PassThrough.

The ASIF functional component may rely on parameters received from an application through a socket function and/or on packet inspection (PI) procedure, a variant of deep packet inspection algorithm to extract information related to a session, such as for example the port to transmit and receive packets, the application protocol used over the session, etc. PI may be used in the IncomingData and OutgoingData functions for confirmation, identification, monitoring, etc., of legacy applications and certain advanced applications. Session information extracted by the PI function may be reported to the SM. Parameters related to a session may include one or more of the following. A session ID (SID) may be a parameter, which may be referred to as a socket ID. The socket ID may be set to NULL if not known. An Application Protocol Name (PNAME) may be a parameter, which may be set to NULL if not known. PNAME values may be linked to the protocols supported by PI (e.g., Table 8). An Application ID (AID) may be a parameter, which may be set to NULL if not known. If sessions are identified as sub-flows of the same application, they may have the same AID. For example, an FTP application may include an FTP control session and an FTP data session. Both sessions may have the same AID.

A single SessionOpen, SessionClose, and PassThrough process may be needed for the ASIF. A separate instance of IncomingData and OutgogingData may be needed for each active session.

A socket interface call may be mapped to ASIF Procedures. Table 5 shows an exemplary mapping between socket interface calls and ASIF processes. Some calls may not be mapped as they may be intended for a server (e.g., TCP server) that may accept connections and not a terminal that initiates them.

**Table 5**

| **Function Call** | **ASIF Procedures** |
|---|---|
| socket() | SessionOpen |
| bind() | |
| listen() | |
| connect() | SessionConnect |
| accept() | |
| send(), or sendto() | OutgoingData |
| recv(), or recvfrom() | IncomingData |
| shutdown() | SessionClose |
| gethostbyname() and gethostbyaddr() | PassThrough |

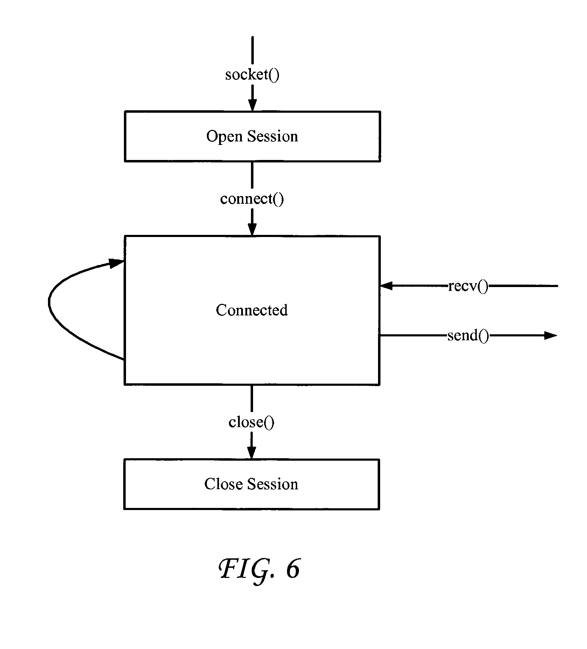

A session may have an associated state. An active session may be created by the SessionOpen process and deleted by the SessionClose process. An exemplary session lifetime is shown in FIG. 6.

During the socket lifetime, the ASIF component may maintain a session state machine (SSM). The SSM may indicate knowledge of the type of application protocol used for the session. The SSM may be updated by a 5-tuple received with the connect() and by the PI function.

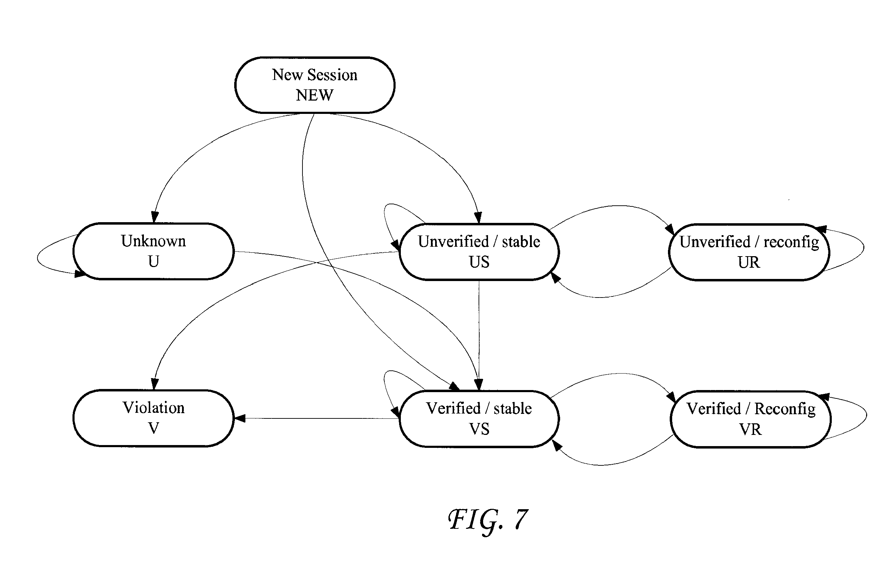

An exemplary state transition diagram (e.g., for the SSM) is shown in FIG. 7, which illustrates a state transition diagram for ASIF monitored sessions. Referring to FIG. 7, one state may include a new session (NEW) state, which may be the starting state setup by the SessionOpen. The SessionConnect() may perform destination port analysis. If it is a well-known port, e.g., defined by IANA, SSM may transition to an unverified/stable (US) state. Otherwise, the SSM may transition into an unknown (U) state. The unknown (U) state may indicate that the application used for the session has not been identified.

FIG. 7 illustrates a violation (V) state. The violation state may indicate that the session protocol has been found to be in violation of the (verified or unverified) identified protocol rules. Transition into this state may result in a report of a session protocol violation to the SM. Operation in the V state may be supported indefinitely.

FIG. 7 illustrates an unverified/stable (US) state. The unverified/stable state may indicate that the application protocol using the session has been identified using the default configuration and/or parameters passed in the connect() call, however, the identification has not been confirmed. The unverified/stable state may indicate that the session is currently not in the process of being re-configured (e.g., no re-configuration trigger has been created).

FIG. 7 illustrates an unverified/reconfigure (UR) state. The unverified/reconfigure state may indicate that the application protocol using the session has been identified using the default configuration and/or parameters passed in the socket() and connect() call, however, the identification has not been confirmed.

FIG. 7 illustrates a verified/stable (VS) state. The verified/stable state may indicate that the application that is using the session has been identified using the default configuration and/or parameters passed in the socket() and connect() calls, and, the identification has been confirmed, e.g., with PI. The verified/stable state may indicate that the session is currently not in the process of being re-configured (e.g., no re-configuration trigger has been created).

FIG. 7 illustrates an unverified/reconfig (VR) state. The unverified/reconfig state may indicate that the application that is using the session has been identified using the default configuration and/or parameters passed in the socket() call, and, the identification has been confirmed. The unverified/reconfig state may indicate that, based on the details of the identified protocol, the session is in the process of being reconfigured and a reconfiguration trigger has been created.

Each state transitions, except NEW → U and NEW → US may occur as a result of reception of a packed in either the outgoing or incoming direction. The transitions NEW → U and NEW → US may occur upon connection of the socket as disclosed herein (e.g., NEW state). The nature of the transition may be a result of the packet inspection function, which may be called for every packet by the IncomingData and OutgoingData processes. The state machine transitions for SID n may occur if the PI function returned SID n.

Table 6 illustrates exemplary session state transition specifications, which may include a cause and result.

**Table 6**

| | | |
|---|---|---|
| Transition | Cause | Result |
| any → V | {VIOLATION, any value} | Protocol violation for SID n reported to SM |
| U → VS | {PROTOCOL ID, any value} | Protocol identification for SID n reported to SM. PI procedure for SID n update to follow identified protocol |
| US → VS | {CONFIRM, any value} | Protocol confirmation for SID n reported to SM. |
| US → UR | {NO CHANGE, RECONFIG} | Reconfiguration event for SID n reported to CM. Reconfiguration triggers created based on additional information. |
| UR → UR | {NO CHANGE, RECONFIG} | Reconfiguration event for SID n reported to CM. Reconfiguration triggers updated based on additional information. |
| UR → US | {NO CHANGE, STABLE} | Reconfiguration completion for SID *n* reported to CM. Reconfiguration triggers deleted. |
| VS → VR | {NO CHANGE, RECONFIG} | Reconfiguration event for SID *n* reported to CM. Reconfiguration triggers created based on additional information. |
| VR → VR | {NO CHANGE, RECONFIG} | Reconfiguration event for SID *n* reported to CM. Reconfiguration triggers updated based on additional information. |
| VR → VS | {NO CHANGE, STABLE} | Reconfiguration completion for SID *n* reported to CM. Reconfiguration triggers deleted. |
| U → U | {NO CHANGE, STABLE} | No action |
| US → US | {NO CHANGE, STABLE} | No action |
| VS → VS | {NO CHANGE, STABLE} | No action |

A packet inspection (PI) function may be called on for a packet, e.g., in either theincoming or outgoing direction. The PI function may be called on each packet that meets one or more of the following: a packet's SID is unknown (e.g., this may occur in the incoming direction); or a packet's SID is associated with a session in the U, US, or UR state. The PI function may be called for a packet with an SID in a VS or VR state. This decision may be left up to the SM and may be configured on a process-by-process basis.

In addition to a received packet, the packet inspection function may take one or more of the following inputs: SID, PNAME, MODE, or INSPECTION LEVEL. SID may be set to NULL if not known (e.g., this may occur in the incoming direction). PNAME may represent a protocol name. PNAME may be set to NULL if not known. MODE may be one of {DISCOVER, CONFIRM, MONITOR}.

In DISCOVER mode, the task of the PI function may be to discover which application protocol is being used for a given SID. If PNAME is not NULL, the list of protocols may be treated as a candidate list and may be used to narrow and speed up the search space. If SID is null, the packet may be assumed to potentially belong to any session in the U state.

In CONFIRM and MONITOR modes, the task of the PI function may be to monitor the protocol operation and set reconfiguration triggers. In these states, SID and PNAME may not be allowed to be set to NULL. Moreover, PNAME may need to have a unique setting and the setting may need to be consistent with the previous setting of PNAME for this SID. A violation of this rule may result in the PI function returning VIOLATION for the SID on the given packet. In CONFIRM mode the PI function may be requested to confirm that a protocol is indeed corresponding to PNAME.

The INSPECTION LEVEL parameter may determine the depth (e.g., level) to which packet inspection is performed for a particular session. The INSPECTION LEVEL parameter may determine the types of reconfiguration triggers that the PI function may be able to set and protocol measurements it may be able to make. INSPECTION LEVEL may be set by the SM based on one or more SM policies. A DEFAULT INSPECTION LEVEL may be set by the SM and may be applied by the ASIF to sessions for which the SM has not set a specific INSPECTION LEVEL. Exemplary INSPECTION LEVELs are illustrated in Table 7.

**Table 7**

| Level # | Inspection Depth | Trigger Settings | Notes |
|---|---|---|---|
| 0 | None | None | In this setting packet inspection may not be performed (beyond extracting the 5-tuple which may be used throughout as a flow-marker) |
| 1 | Top-level protocol | None | PI may be used to identify/confirm top-level protocol and monitor its operation if needed (recall that SM may configure ASIF to not use PI in Vx states). |
| 2 | Protocol sub-flows | TBD | Identity/confirm sub-flows in protocols where this is supported. Details may be protocol specific. |
| 3 | Related sessions | Sub-session open /close events | Identify/confirm sessions opened by the same protocol (e.g. when FTP opens new sessions). |
| 4 | Application sub-flows | As in level 2, AND TBD | Identify/confirm application sub-flows. Protocol sub-flow identification may be needed for this. Examples of application sub-flows may include I, P, B packets in video coded streams |
| 5 | Protocol sub-flows and related sessions | As in Levels 2 and 3 | Combines levels 2 and 3 |
| 6 | Application sub-flows and related sessions | As in Levels 3 and 4 | Combines levels 3 and 4 |

The PI function may return one or more of the following: PNAME, the application protocol; application ID for the current packet SID; other related SIDs; one of the following {NO CHANGE, VIOLATION, CONFIRM, PROTOCOL ID}; one of the following {STABLE, RECONFIG}; or, if RECONFIG is returned, the nature of the reconfiguration may be reported. The nature of the configuration may comprise one or more of the following: NEXT_TP (transport protocol in the next message); NEXT_PRT_S (next source port); NEXT_PRT_D (next destination port); or application-protocol specific information.

The list of protocols supported by the PI function may be a configurable parameter. The actual PI function may be one of any known deep packet inspection algorithms.

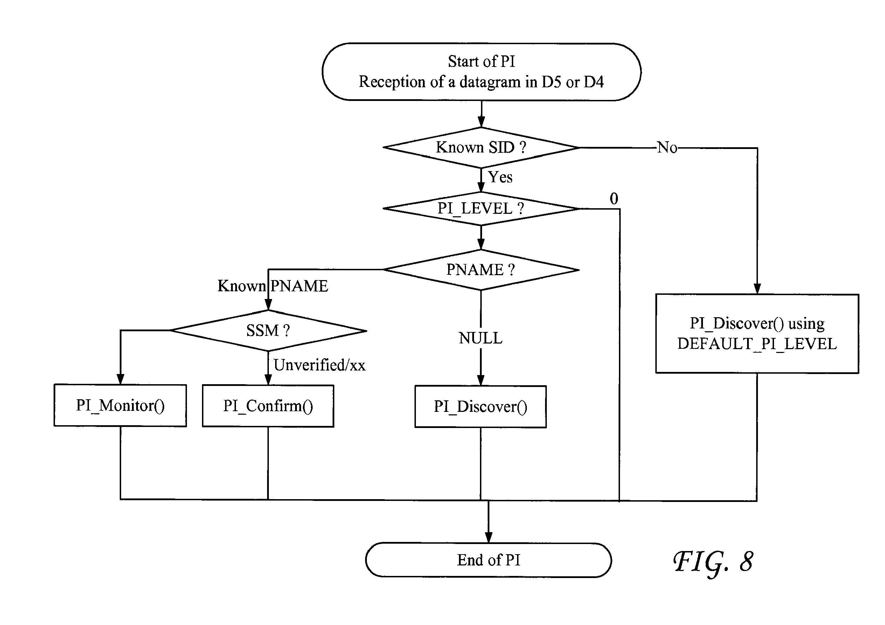

FIG. 8 illustrates an exemplary packet inspection.

In a current packet analysis, if PI detects a potential future opening session that may be linked to the current session and belonging to the application associated with the current session, it may setup a potential sub-flow trigger. The potential sub-flow trigger may be used for later session opening and new session packet analysis to confirm if the new open session belongs to the application associated with the current session. Associated with this trigger, PI may keep track of the details related to the expected future session (e.g., port number, protocol, etc.). For example, consider an FTP session started with an FTP control connection initiated at the terminal with TCP destination port 21 and some particular destination IP address (IPx). The PI function may monitor this connection and detect an FTP command returning to the terminal with an instruction to setup an FTP data connection using TCP port A and destination IP IPy. The PI function may then set up a potential sub-flow trigger. The potential sub-flow trigger may comprise one or more of the following: sub-flow trigger ID; sub-flow trigger details; sub-flow trigger information; or sub-flow trigger lifetime.

Sub-flow trigger details may include one or more of the following: application ID (e.g., use the app. ID associated with the FTP application); destination port type: TCP; destination port address: A; or, destination IP: IPy. Sub-flow trigger information may include one or more of the following: master session ID: session ID of the FTP control session; sub-flow trigger type: "FTP data transfer"; or sub-flow trigger additional info: additional information, such QoS requirement that may be associated with this type of session, e.g., size of file requested, etc. The sub-flow trigger lifetime may include time-to-live, expiration time, etc.

The SessionOpen process may be responsible for starting a communication session for an application. The SessionOpen process may be started when an application makes a socket() call, e.g., on D5, and may be responsible for generating a response to the call for the application. Upon activation, the SessionOpen process may perform one or more of the following: check if the socket() call corresponds to a new session or, if a potential sub-flow trigger is raised, determine if the socket can be associated with a pre-existing session; define a session ID (SID) to be used in communication about the session with other processes and components; retrieve the socket type (e.g., UDP, TCP, etc.) information from the socket() parameters; alert the session manager and connection manager of a request to open a new session; or, if the socket is accepted, enter into open session state.

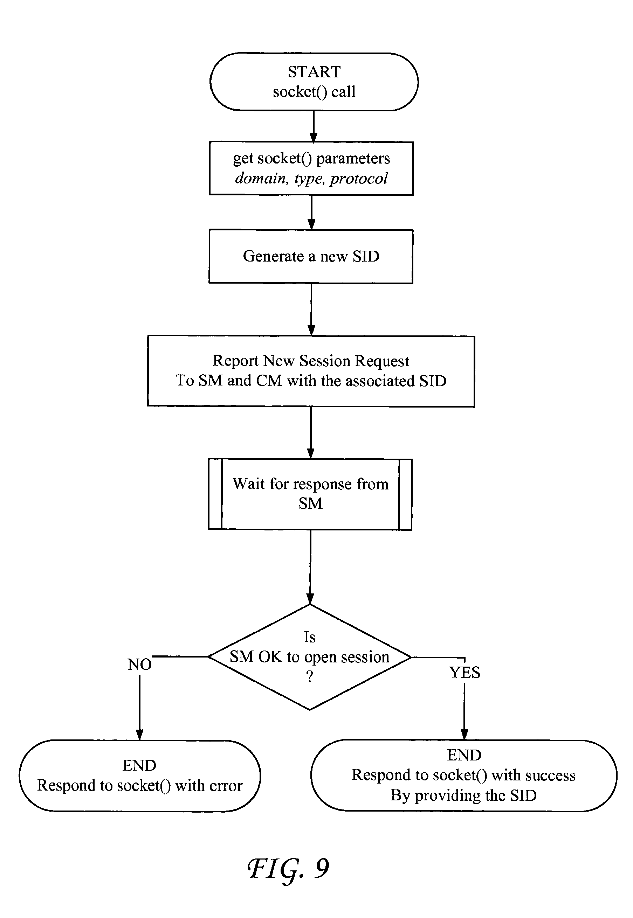

FIG. 9 illustrates an exemplary SessionStart/SessionOpen process.

The function int socket (int family, int type, int protocol) may create a communication end point and may return a descriptor (e.g., Session ID) that may be used for further action associated with the socket. For TCP/IP based sockets (e.g., as disclosed herein), the family parameter may be set to AF_INET. The type parameter may be SOCK_STREAM (e.g., for TCP) or SOCK_DGRAM (e.g., for UDP). The protocol field may specify a specific protocol in case the network model supports different types of stream and datagram models. This field may be set to 0 (e.g., TCP/IP may have one protocol for each).

The function domain may specify the communications domain in which a socket is to be created. For TCP/IP based sockets (e.g., as disclosed herein), the family parameter may be set to PF_INET (IPv4 Internet protocols) and PF_INET6 (IPv6 Internet protocols).

"Type" may specify the type of socket to be created. "Protocol" may specify a particular protocol to be used with the socket. If the protocol argument is non-zero, it may specify a protocol that is supported by the address family. If the protocol argument is zero, the default protocol for this address family and type may be used. The protocols supported by the system may be implementation-defined.

The session ID may be randomly generated by ASIF. The session ID may be returned as a socket ID that may be used by the application in later functions calls that may operate on that socket.

On reception of a connect() call, e.g., on D5, the SessionConnect process may be responsible for connecting the socket SID passed as a parameter in the function call to the peer whose destination port and IP have been passed through the function. The SessionConnect process may perform one or more of the following: attempt to identify the session using default application configurations; attempt to identify if the session is an application sub-flows; update SSM to either Unknown (U) or Unverified / Stable (US) state; request the session manager of a request to connect an already open session by calling SM_SessionConnect(); or return a value.

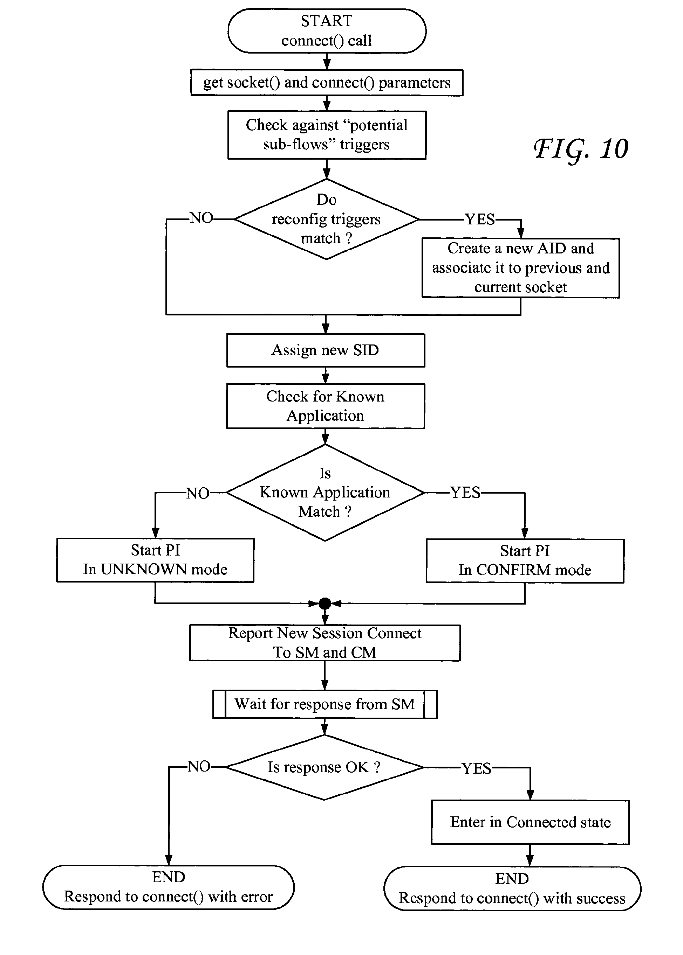

FIG. 10 illustrates an exemplary SessionConnect process.

The connect() function call may connect a socket, identified by its file descriptor, to a remote host specified by that host's address in the argument list. Certain types of sockets may be connectionless, UDP sockets may be an example. For these sockets, connect may take the following meaning: the default target for sending and receiving data gets set to the given address, which may allow the use of functions such as send() and recv() on connectionless sockets. connect() may return an integer representing an error code, 0 may represent success, -1 may represent an error, etc.

The prototype for connect may be as follows: int connect (int sockfd, const struct sockaddr *serv_addr, socklen_t addrlen). A first argument may be a socket handle (e.g., the number returned from the socket() function call). A second argument may be a sockaddr_in structure. The sin_port field of the address argument may be the local source port number associated with this socket. That is, for a "send" operation with this socket, the source port field in the TCP/UDP header may get set with this value. If specifying a source port is not required, setting this value to INADDR_ANY(0) may allow the operating system to pick any available port number. The sin_addr field may specify which network interface device to use. Since many hosts may have one network interface and one IP address, this field may be set with the host's own IP address. The socket library may provide no immediate way for a host to determine its own IP address. Specifying the value of INADDR_ANY(0) in this field may indicate to the operating system to pick any available interface and address. The address of the sockaddr_in structure may be passed into the bind call so that the socket may be ready to communicate with remote hosts. A third parameter passed to bind may be the length of the sockaddr_in structure.

A check may be made for a known application protocol. For LEGACY applications, the triplet <transport protocol, source port, destination port> may be checked against a table of IANA known application. Table 8 is an example table of protocol analysis based on connect parameters.

**Table 8**

| Transport Prtcl. | Dest. Port | Source Port | PNAME |
|---|---|---|---|
| TCP or UDP | 80 | ANY | HTTP |
| TCP or UDP | 21 | ANY | FTP_CONTROL (RFC 959 [17]) |
| TCP or UDP | 20 | ANY | FTP_DATA (RFC 959 [17]) |
| TCP or UDP | 53 | ANY | DNS (RFC 1035 [18]) |
| TCP or UDP | 443 | ANY | HTTPS (HTTP over TLS/SSL) |
| TCP or UDP | 110 | ANY | POP3 |
| TCP or UDP | 143 | ANY | IMAP |
| TCP or UDP | 25 | ANY | SMTP |
| TCP or UDP | 554 | ANY | RTSP |

If the connect() parameters are part of the table above, the SSM may be set to US with the associated application protocol PNAME setup with the value from the table. If not, SSM may transition to U state and PNAME may be set to NULL.

Incoming data may be called when the application calls a recv() or recevfrom() on D5. If the session ID for the packet can be identified (e.g., based on the 5-tuple), data may be passed to the correct application through D5. If the session for which data is received indicates that the PI function is to be invoked, this may be done. When the PI function completes, an action defined in Table 6 is taken. OutgoingData may be called on each outgoing packet. If the session number for the packet can be identified (e.g., based on the 5-tuple), data may be passed to the correct transport protocol.

SessionClose may be started when an application makes a close() call on D5 and is responsible for generating a response to this call for the application. Upon activation, the SessionClose process may perform one or more of the following: terminate the SSM related to the SID; alert the SM and CM of a request to close an open session; or deallocate the Session ID (SID).

The PassThrough process may transfer a socket call to another component with no ASIF specific process. For *gethostbyname*() or *gethostbyaddr*() call on D5, ASIF may transparently pass these functions to the SM to be processed and respond back the return value with no additional check. For the src address, applications may use APIs, e.g., getaddrinfo(), that may return a list of addresses to the application. The list may comprise IPv6 and/or IPv4 addresses.

A specification of the interfaces associated with the ASIF functionality may be provided. D5 may refer to the interface between the applications and the advanced socket IF (ASIF). This interface may present a BSD-like sockets interface for both Legacy and ADV Application. Functions used may be limited to client side functions. Exemplary D5 functions are are shown in Table 9.

**Table 9**

| **Function Name** | **Parameters** | **Description** |
|---|---|---|
| socket() | [in] domain | May be used to create a new socket. |
| | [in] type | |
| | [in] protocol | |
| | [out] SessionID | |
| bind() | [in] Session ID | May be used to associate a socket identified by its Session ID with a socket address structure, i.e. a specified local port number and IP address. |
| | [in] Local Address | |
| | [in] Length of Dest Addr (IPv4 or IPv6) | |
| | | Returns 0 upon success, -1 otherwise |
| | [out] return value | |
| | | Usually, bind is used on the server side to specify for a socket the protocol port number where it will be waiting for messages. That is the basic difference between Client and Server. |
| listen() | | May be used primarily on the server side. May not be mapped in ASIF. |
| connect() | [in] Session ID | May attempt to make a connection on a connection-mode socket or to set or reset the peer address of a connectionless-mode socket. |
| | [in] Dest Address | |
| | [in] Length of Dest Addr (IPv4 or IPv6) | |
| | [out] return value | |
| accept() | | May be used on the server side. May not be mapped in ASIF. |
| send() | [in] Session ID | May be called by the application for sending outgoing data on the specified socket to its peer. The send() function may be limited to sending a message when the socket is connected. |
| | [in] Outgoing Buffer | |
| | [in] Length of buffer | |
| | [in] Flags | |
| | [out] return the nb of bytes sent | |
| sendto() | [in] Session ID | If the socket is a connectionless-mode socket, the message may be sent to the address specified by dest_addr if no pre-specified peer address has been set. |
| | [in] Outgoing Buffer | |
| | [in] Length of buffer | |
| | [in] Flags | |
| | [in] Dest Add | |
| | [in] Length of Dest Addr (IPv4 or IPv6) | |
| | [out] return the nb of bytes sent | |
| recv() | [in] Session ID | May receive incoming data on the specified socket from a peer. |
| | [in] Incoming Buffer | |
| | [in] Length of buffer | |
| | [in] Flags | |
| | [out] return the nb of bytes sent | |
| recvfrom () | [in] Session ID | May receive incoming data on the specified socket from a peer identified by the Src Address. |
| | [in] Incoming Buffer | |
| | [in] Length of buffer | |
| | [in] Flags | |
| | [in] Src Add | |
| | [in] Length of Src Addr (IPv4 or IPv6) | |
| | [out] return the length of the received message in byte | |
| shutdown () | [in] Session ID | May cause the system to release resources allocated to a socket. |
| | [out] Return Value | |
| setsockopt/getsockopt() | | May not be mapped in ASIF. |
| getaddrinfo() | [in] Node | May return a list of addresses to the application. This list might contain both IPv6 and IPv4 addresses. |
| | [in]service | |
| | [in] hints | |
| | [out] res | |

C1 may refer to the interface between the advanced socket IF (ASIF) and a control plane entity, such as the SM. This interface may allow the ASIF to notify the SM that a new session has been detected or that a change has occurred for an active session. A change may refer to one or more of the following: an addition of a new socket (e.g., new session, sub-flow, etc.) to the session; a deletion of a sub-flow or a change in the session description (e.g., new QoS, mobility required or not, level of security), etc. Exemplary C1 functions are provided in Table 10.

**Table 10**

| **Function Name** | **Parameters** | **Description** |
|---|---|---|
| SM_SessionOpen() | [in] domain | May be called by ASIF to notify SM that a new session is detected. ASIF may provide the parameters received on the socket() call, and the allocated Session ID. The [adv] values may be passed to SM even if the application does not use the [adv] expended values in the socket call. The ASIF may fill in information it can imply from socket call, etc., otherwise it may fill in NULL for each value. |
| | [in] type | |
| | [in] protocol | |
| | [in] SessionID | |
| | [in] adv | |
| SM_SessionConnect() | [in] Session ID | May be called by ASIF to notify SM that connection is requested on a previously open session. ASIF may provide the related Session ID, the PNAME, and the parameters received in the connect(). The related QoS may or may not be available |
| | [in] PNAME | |
| | [in] Dest Address | |
| | [in] Length of Dest Addr (IPv4 or IPv6) | |
| | [in] QoS | |
| SM_SessionUpdate() | [in] Session ID | May be called by ASIF to notify SM any update on the session identified by Session ID. |
| | [in] PNAME | ASIF may provide a Application Protocol update or AID if the session is identified as a sub-flow |
| | [in] AID | |
| ASIF_PiLevelConfigura tion() | [in] Level | May be called by SM to configure the inspection level of PI performed on a session identified by a SID transmitted with the function. |
| | [in] Session ID | |
| | | If SID set to ALL_SESSION, the PI's level may be the same for all the open sessions. |
| SM_ProtocolViolationN otification() | [in] Session ID | May be called by ASIF to notify a violation in the application protocol |
| SM_SessionClose() | [in] SessionID | May be called by ASIF to notify SM to close the session identified by "Session ID" |
| getnameinfo() | | Function may be transmitted directly by ASIF from the application to SM. It may return a list of addresses to the application. This list may comprise both IPv6 and IPv4 addresses. |

D4 may be used between ASIF and the Transport FC. D4 may allow sending and receiving data packets to/from the Transport FC. Exemplary D4 functions are illustrated in Table 11.

**Table 11**

| **Function Name** | **Parameters** | **Description** |
|---|---|---|
| ASIF_recv() and ASIF_send() | | Call by the ASIF that may be for sending and receiving data to/from Transport FC. The data may be sent and received through the socket setup during the socket creation |

The socket() interface function may be enhanced with a parameter (adv) so that it has the format shown in Table 12.

**Table 12**

| **Function Name** | **Parameters** | **Description** |
|---|---|---|
| socket() | [in] domain | May be used to create a new socket. |
| | [in] type | |
| | [in] protocol | adv parameters may represent an expansion of the socket call that may be used by Advanced applications to provide, for example, detailed application identifying information, QoS and other application preferences. |
| | [in] adv | |
| | [out] SessionID | |

The adv parameter may include one or more of the following parameters: App. ID, QoS Preference, protocol: ADV, master_socket_id, num_subflows, subflow_desc, or Preferred_network. App. ID may be an application ID selected by the application that may be used by the system to link multiple sessions opened up by the same application. The process ID assigned to the application by the operating system may be used as the App ID. QoS Preference may provide a QoS Preference. An application may use protocol : ADV to transmit its application protocol with values, e.g., as disclosed herein. The master_socket_id may indicate that the socket is to be considered a sub-connection for a connection with another socket id. The num_subflows may be used to indicate that the socket includes multiple sub-flows. If values > 1 are used, sub-flow descriptors may be included, otherwise this may be ignored. Values > 1 may not be supported. The subflow_desc may be a sub-flow descriptor. Preferred_network may be used to indicate an application's network preference. Two types may be included. The application may indicate a preference for: <MOBILE, PUBLIC_IP, PRIVATE_IP> as a network or it may indicate a specific network (e.g., specific Mobile operator, specific public WiFI network via an SSID list, etc.). MOBILE may be a mobile/cellular network. PUBLIC_IP may be a public IP (e.g., internet access network). PRIVATE_IP may be a private IP network - e.g., an organization's enterprise network.

QoS Preference may provide the application a way to specify a type of connection it requires and allow the SM to allocate the session resources. It may define a set of QoS Indicators that the application may arrange in order of preference. An application may be limited to using one or a subset of QoS Indicators (e.g., specify several in order of highest preference to lowest). The ASIF may set and/or modify these based on packet inspection analysis.

QoS Classes may include one or more of the following. QoSI THROUGHPUT: this QoS Indicator may be used to signal importance of throughput maximization. QoSI_LATENCY: this QoS Indicator may be used to signal importance of minimizing latency, which may be at the expense of throughput. QoSI_RELIABILITY: this QoS Indicator may be used to signal importance of minimizing packet error rate, which may be at the expense of throughput and latency. QoS_POWER_EFF: this QoS Indicator may be used to signal importance of minimizing power consumptions, which may be at the expense of other QoS aspects. QoS_CRITICAL: this QoS Indicator may be used to signal that the application considers itself a critical function service (e.g., human health, operational reliability, etc.). An application may use this to request high priority service, although the resources to be assigned to it may be subject to decisions by the SM. QoS_SECURE: this QoS Indicator may be used to signal that a highly secure connectivity is needed. The extent to which this is provided may be up to the SM. QoS_BACKGROUND: this QoS Indicator may be used for background services and may allow the SM to allocate resources, e.g., to minimize cost, etc.

In the case of cellular connections, the QoS Class specified may be mapped to a QoS class specified within cellular system specifications.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method to determine Quality of Service information, the method comprising:
storing, by a user equipment (UE), a policy that indicates a level of inspection relating to application identification, wherein the level of inspection is associated with a computational intensity;
receiving, by the UE, information associated with a session; and
performing, by the UE, an inspection of the received information at the level indicated by the policy.

2. The method of claim 1, wherein the level of inspection is a first level of inspection, and wherein the received information comprises application provided information, and wherein the first level of inspection indicates that the inspection comprises inspecting the application provided information.

3. The method of claim 2, wherein the application provided information includes a socket call.

4. The method of claim 3, wherein the first level of inspection comprises comparing a port associated with the socket call with an identified port.

5. The method of claim 4, further comprising identifying, by the UE, an application associated with the session based on the inspection.

6. The method of claim 1, wherein the level of inspection is a second level of inspection, and wherein the received information comprises packet data, and wherein the second level of inspection indicates that the inspection comprises a packet inspection of the packet data.

7. The method of claim 6, wherein the second level of inspection further indicates a depth of packet inspection to perform, and wherein the packet inspection is performed at the indicated depth.

8. The method of claim 7, further comprising identifying, by the UE, an application associated with the session based on the inspection.

9. The method of claim 1, further comprising querying, by the UE, an operating system based on the policy, wherein the operating system is associated with the UE.

10. The method of claim 9, wherein the level of inspection is a third level of inspection, and wherein the received information comprises operating system provided information, and wherein the third level of inspection indicates that the inspection comprises inspecting the operating system provided information.

11. The method of claim 10, further comprising identifying, by the UE, an application associated with the session based on the inspection.

12. A user equipment (UE) configured to determine Quality of Service information, the UE comprising:
a memory configured to:
store a policy that indicates a level of inspection relating to application identification, wherein the level of inspection is associated with a computational intensity;
a receiver configured to:
receive information associated with a session; and
a processor configured to:
perform an inspection of the received information at the level indicated by the policy.

13. The UE of claim 12, wherein the level of inspection is a first level of inspection, and wherein the received information comprises application provided information, and wherein the first level of inspection indicates that the inspection comprises inspecting the application provided information.

14. The UE of claim 13, wherein the application provided information includes a socket call.

15. The UE of claim 14, wherein the first level of inspection comprises comparing a port associated with the socket call with an identified port.

16. The UE of claim 15, wherein the processor is further configured to identify an application associated with the session based on the inspection.

17. The UE of claim 12, wherein the level of inspection is a second level of inspection, and wherein the received information comprises packet data, and wherein the second level of inspection indicates that the inspection comprises a packet inspection of the packet data.

18. The UE of claim 17, wherein the second level of inspection further indicates a depth of packet inspection to perform, and wherein the packet inspection is performed at the indicated depth.

19. The UE of claim 18, wherein the processor is further configured to identify an application associated with the session based on the inspection.

20. The UE of claim 12, wherein the processor is further configured to query an operating system based on the policy.

21. The UE of claim 20, wherein the level of inspection is a third level of inspection, and wherein the received information comprises operating system provided information, and wherein the third level of inspection indicates that the inspection comprises inspecting the operating system provided information.

22. The UE of claim 21, wherein the processor is further configured to identify an application associated with the session based on the inspection.

## Patentansprüche

1. Verfahren zum Bestimmen von Dienstqualitätsinformationen, wobei das Verfahren Folgendes umfasst:
Speichern, durch ein Nutzergerät (User Equipment, UE), einer Vorschrift, die eine Inspektionsebene in Bezug auf eine Anwendungsidentifizierung anzeigt, wobei die Inspektionsebene mit einem Rechenaufwand verknüpft ist;
Empfangen, durch das UE, von Informationen, die mit einer Sitzung verknüpft sind; und
Ausführen, durch das UE, einer Inspektion der empfangenen Informationen auf der durch die Vorschrift angezeigten Ebene.

2. Verfahren nach Anspruch 1, wobei die Inspektionsebene eine erste Inspektionsebene ist, und wobei die empfangenen Informationen durch eine Anwendung bereitgestellte Informationen umfassen, und wobei die erste Inspektionsebene anzeigt, dass die Inspektion das Inspizieren der durch die Anwendung bereitgestellten Informationen umfasst.

3. Verfahren nach Anspruch 2, wobei die durch die Anwendung bereitgestellten Informationen einen Socket-Call enthalten.

4. Verfahren nach Anspruch 3, wobei die erste Inspektionsebene das Vergleichen eines Ports, der mit dem Socket-Call verknüpft ist, mit einem identifizierten Port umfasst.

5. Verfahren nach Anspruch 4, das des Weiteren umfasst, durch das UE eine Anwendung, die mit der Sitzung verknüpft ist, anhand der Inspektion zu identifizieren.

6. Verfahren nach Anspruch 1, wobei die Inspektionsebene eine zweite Inspektionsebene ist, und wobei die empfangenen Informationen Paketdaten umfassen, und wobei die zweite Inspektionsebene anzeigt, dass die Inspektion eine Paketinspektion der Paketdaten umfasst.

7. Verfahren nach Anspruch 6, wobei die zweite Inspektionsebene des Weiteren eine Tiefe einer auszuführenden Paketinspektion anzeigt, und wobei die Paketinspektion auf der angezeigten Tiefe ausgeführt wird.

8. Verfahren nach Anspruch 7, das des Weiteren umfasst, durch das UE eine Anwendung, die mit der Sitzung verknüpft ist, anhand der Inspektion zu identifizieren.

9. Verfahren nach Anspruch 1, das des Weiteren umfasst, durch das UE ein Betriebssystem anhand der Vorschrift abzufragen, wobei das Betriebssystem mit dem UE verknüpft ist.

10. Verfahren nach Anspruch 9, wobei die Inspektionsebene eine dritte Inspektionsebene ist, und wobei die empfangenen Informationen durch ein Betriebssystem bereitgestellte Informationen umfassen, und wobei die dritte Inspektionsebene anzeigt, dass die Inspektion das Inspizieren der durch ein Betriebssystem bereitgestellten Informationen umfasst.

11. Verfahren nach Anspruch 10, das des Weiteren umfasst, durch das UE eine Anwendung, die mit der Sitzung verknüpft ist, anhand der Inspektion zu identifizieren.

12. Nutzergerät (UE), das dafür konfiguriert ist, Dienstqualitätsinformationen zu bestimmen, wobei das UE Folgendes umfasst:
einen Speicher, der für Folgendes konfiguriert ist:
Speichern einer Vorschrift, die eine Inspektionsebene in Bezug auf eine Anwendungsidentifizierung anzeigt, wobei die Inspektionsebene mit einem Rechenaufwand verknüpft ist;
einen Empfänger, der für Folgendes konfiguriert ist:
Empfangen von Informationen, die mit einer Sitzung verknüpft sind; und
einen Prozessor, der für Folgendes konfiguriert ist:
Durchführen einer Inspektion der empfangenen Informationen auf der durch die Vorschrift angezeigten Ebene.

13. UE nach Anspruch 12, wobei die Inspektionsebene eine erste Inspektionsebene ist, und wobei die empfangenen Informationen durch eine Anwendung bereitgestellte Informationen umfassen, und wobei die erste Inspektionsebene anzeigt, dass die Inspektion das Inspizieren der durch die Anwendung bereitgestellten Informationen umfasst.

14. Das UE nach Anspruch 13, wobei die durch die Anwendung bereitgestellten Informationen einen Socket-Call enthalten.

15. UE nach Anspruch 14, wobei die erste Inspektionsebene das Vergleichen eines Ports, der mit dem Socket-Call verknüpft ist, mit einem identifizierten Port umfasst.

16. UE nach Anspruch 15, wobei der Prozessor des Weiteren dafür konfiguriert ist, eine Anwendung, die mit der Sitzung verknüpft ist, anhand der Inspektion zu identifizieren.

17. UE nach Anspruch 12, wobei die Inspektionsebene eine zweite Inspektionsebene ist, und wobei die empfangenen Informationen Paketdaten umfassen, und wobei die zweite Inspektionsebene anzeigt, dass die Inspektion eine Paketinspektion der Paketdaten umfasst.

18. UE nach Anspruch 17, wobei die zweite Inspektionsebene des Weiteren eine Tiefe einer auszuführenden Paketinspektion anzeigt, und wobei die Paketinspektion auf der angezeigten Tiefe ausgeführt wird.

19. UE nach Anspruch 18, wobei der Prozessor des Weiteren dafür konfiguriert ist, eine Anwendung, die mit der Sitzung verknüpft ist, anhand der Inspektion zu identifizieren.

20. UE nach Anspruch 12, wobei der Prozessor des Weiteren dafür konfiguriert ist, ein Betriebssystem anhand der Vorschrift abzufragen.

21. UE nach Anspruch 20, wobei die Inspektionsebene eine dritte Inspektionsebene ist, und wobei die empfangenen Informationen durch ein Betriebssystem bereitgestellte Informationen umfassen, und wobei die dritte Inspektionsebene anzeigt, dass die Inspektion das Inspizieren der durch ein Betriebssystem bereitgestellten Informationen umfasst.

22. UE nach Anspruch 21, wobei der Prozessor des Weiteren dafür konfiguriert ist, eine Anwendung, die mit der Sitzung verknüpft ist, anhand der Inspektion zu identifizieren.

## Revendications

1. Procédé de détermination d'informations de qualité de service, le procédé comprenant :
la mémorisation, par un équipement utilisateur (UE), d'une politique indiquant un niveau d'inspection relatif à une identification d'application, dans lequel le niveau d'inspection est associé à une intensité de calcul ;
la réception, par l'UE, d'informations associées à une session ; et
l'exécution, par l'UE, d'une inspection des informations reçues au niveau indiqué par la politique.

2. Procédé selon la revendication 1, dans lequel le niveau d'inspection est un premier niveau d'inspection, et dans lequel les informations reçues comprennent des informations fournies par l'application, et dans lequel le premier niveau d'inspection indique que l'inspection comprend l'inspection des informations fournies par l'application.

3. Procédé selon la revendication 2, dans lequel les informations fournies par l'application comprennent un appel de socket.

4. Procédé selon la revendication 3, dans lequel le premier niveau d'inspection comprend la comparaison d'un port associé à l'appel de socket à un port identifié.

5. Procédé selon la revendication 4, comprenant en outre l'identification, par l'UE, d'une application associée à la session sur la base de l'inspection.

6. Procédé selon la revendication 1, dans lequel le niveau d'inspection est un deuxième niveau d'inspection, et dans lequel les informations reçues comprennent des données en paquets, et dans lequel le deuxième niveau d'inspection indique que l'inspection comprend une inspection de paquets des données en paquets.

7. Procédé selon la revendication 6, dans lequel le deuxième niveau d'inspection indique en outre une profondeur d'inspection de paquets à effectuer, et dans lequel l'inspection de paquets est effectuée à la profondeur indiquée.

8. Procédé selon la revendication 7, comprenant en outre l'identification, par l'UE, d'une application associée à la session sur la base de l'inspection.

9. Procédé selon la revendication 1, comprenant en outre l'interrogation, par l'UE, d'un système d'exploitation sur la base de la politique, dans lequel le système d'exploitation est associé à l'UE.

10. Procédé selon la revendication 9, dans lequel le niveau d'inspection est un troisième niveau d'inspection, et dans lequel les informations reçues comprennent des informations fournies par le système d'exploitation, et dans lequel le troisième niveau d'inspection indique que l'inspection comprend l'inspection des informations fournies par le système d'exploitation.

11. Procédé selon la revendication 10, comprenant en outre l'identification, par l'UE, d'une application associée à la session sur la base de l'inspection.

12. Equipement utilisateur (UE) configuré pour déterminer des informations de qualité de service, l'UE comprenant :
une mémoire configurée pour effectuer :
la mémorisation d'une politique indiquant un niveau d'inspection relatif à une identification d'application, dans lequel le niveau d'inspection est associé à une intensité de calcul ;
un récepteur configuré pour effectuer :
la réception d'informations associées à une session ; et
un processeur configuré pour effectuer :
l'exécution d'une inspection des informations reçues au niveau indiqué par la politique.

13. UE selon la revendication 12, dans lequel le niveau d'inspection est un premier niveau d'inspection, et dans lequel les informations reçues comprennent des informations fournies par l'application, et dans lequel le premier niveau d'inspection indique que l'inspection comprend l'inspection des informations fournies par l'application.

14. UE selon la revendication 13, dans lequel les informations fournies par l'application comprennent un appel de socket.

15. UE selon la revendication 14, dans lequel le premier niveau d'inspection comprend la comparaison d'un port associé à l'appel de socket à un port identifié.

16. UE selon la revendication 15, dans lequel le processeur est en outre configuré pour effectuer l'identification d'une application associée à la session sur la base de l'inspection.

17. UE selon la revendication 12, dans lequel le niveau d'inspection est un deuxième niveau d'inspection, et dans lequel les informations reçues comprennent des données en paquets, et dans lequel le deuxième niveau d'inspection indique que l'inspection comprend une inspection de paquets des données en paquets.

18. UE selon la revendication 17, dans lequel le deuxième niveau d'inspection indique en outre une profondeur d'inspection de paquets à effectuer, et dans lequel l'inspection de paquets est effectuée à la profondeur indiquée.

19. UE selon la revendication 18, dans lequel le processeur est en outre configuré pour effectuer l'identification d'une application associée à la session sur la base de l'inspection.

20. UE selon la revendication 12, dans lequel le processeur est en outre configuré pour effectuer l'interrogation d'un système d'exploitation sur la base de la politique.

21. UE selon la revendication 20, dans lequel le niveau d'inspection est un troisième niveau d'inspection, et dans lequel les informations reçues comprennent des informations fournies par le système d'exploitation, et dans lequel le troisième niveau d'inspection indique que l'inspection comprend l'inspection des informations fournies par le système d'exploitation.

22. UE selon la revendication 21, dans lequel le processeur est en outre configuré pour effectuer l'identification d'une application associée à la session sur la base de l'inspection.
